# EUROPEAN PATENT APPLICATION

(11) **EP 2 549 393 A1**
(43) Date of publication of application: **23.01.2013**
(21) Application number: 12162707.9
(22) Date of filing: 30.03.2012
(51) Int. Cl.: G06F 17/30

(54) **Apparatus and method for providing summary information in electronic book service system**

(30) Priority: 21.07.2011 KR 20110072586
(71) Applicant: Samsung Electronics Co., Ltd., Suwon-si, Gyeonggi-do, 443-742 (KR)
(72) Inventor: Jeon, Yong-Joon, Gyeonggi-do (KR)
(74) Representative: Jenkins, Richard Gavin

(57) **Abstract**

An apparatus and a method for generating and providing summary information for an Electronic (E)-book depending on a user characteristic are provided. The method includes determining a number of levels of the summary information and a user characteristic for each level of the summary information; generating at least one summary information dataset corresponding to each level of the summary information; and combining the at least one summary information dataset with corresponding E-book data.

## Description

### BACKGROUND OF THE INVENTION

### 1. Field of the Invention

The present invention relates generally to an Electronic (E)-book service system and, more particularly, the present invention relates to an apparatus and a method for providing summary information in an E-book service system.

### 2. Description of the Related Art

An E-book is a digital version of a book that can be viewed through an electronic device such as a computer. Recently, with the improved performance of smartphones, tablet Personal Computers (PCs), and the like, an increase of a demand E-books is expected. An E-book service not only displays the text of the books but also provides various other functions such as displaying bookmarks, adding a memo, underlining, and the like. Furthermore, a moving image or sound contents that cannot be shown on a paper copy of a book may be shown on the E-book.

Under the paper book environment, children who cannot yet read ask their parents to read books for them. Even an adult who is literate, generally understands the contents of a book by reading several front pages of the book or via overall summary information. In an E-book, a user friendly method such as providing overall summary information for a book to a user compared to the conventional paper book in selecting a book may be applied.

However, the same summary is not helpful to all readers in selecting a book. That is, since a current E-book service provides the same summary information regarding the same book regardless of the reader, the summary information may not be useful who is unable to understand the summary information.

### SUMMARY OF THE INVENTION

The present invention is designed to substantially solve at least the above-described problems and/or disadvantages and to provide at least the advantages below. Accordingly, an aspect of the present invention is to provide an apparatus and a method for providing summary information with consideration of a user in an E-book service system.

Another aspect of the present invention is to provide an apparatus and a method for generating summary information with consideration of a user in an E-book service system.

Still another aspect of the present invention is to provide an apparatus and a method for providing summary information suitable for a user's recognition ability in an E-book service system.

Yet another aspect of the present invention is to provide an apparatus and a method for providing different summary information depending on a user's characteristic in an E-book service system.

Still yet another aspect of the present invention is to provide an apparatus and a method for providing different summary information depending on a user's age group in an E-book service system.

In accordance with an aspect of the present invention, a method for generating summary information for an Electronic (E)-book is provided. The method includes determining a number of levels of the summary information and a user characteristic for each level of the summary information; generating at least one summary information dataset corresponding to each level of the summary information; and combining the at lease one summary information dataset with corresponding E-book data.

In accordance with another aspect of the present invention, a method for displaying summary information for an Electronic (E)-book is provided. The method includes determining a user characteristic when the E-book is selected from a list; loading summary information dataset corresponding to the user characteristic among a plurality of summary information datasets for the E-book; decoding the summary information dataset; and displaying the summary information.

In accordance with still another aspect of the present invention, an apparatus for generating summary information for an Electronic (E)-book is provided. The apparatus includes a generator for determining the number of levels of the summary information and a user characteristic for each level of the summary information, and generating at least one summary information dataset corresponding to each level of the summary information; and a combiner for combining the at least one summary information dataset with corresponding E-book data.

In accordance with yet another aspect of the present invention, an apparatus for displaying summary information for an Electronic (E)-book is provided. The apparatus includes a controller for, when the E-book is selected from a list, determining a user characteristic, loading summary information dataset corresponding to the user characteristic among a plurality of summary information datasets for the E-book and decoding the summary information dataset; and an output unit for displaying the summary information.

### BRIEF DESCRIPTION OF THE DRAWINGS

The above and other aspects, features and advantages of the present invention will be more apparent from the following detailed description taken in conjunction with the accompanying drawings, in which:
FIG. 1 is a flowchart illustrating a procedure for generating summary information for an E-book according to an embodiment of the present invention;
FIG. 2 is a flowchart illustrating a procedure for displaying summary information for an E-book according to an embodiment of the present invention;
FIG. 3 is a block diagram illustrating an apparatus for generating summary information for an E-book according to an embodiment of the present invention; and
FIG. 4 is a block diagram illustrating an apparatus for displaying summary information for an E-book according to an embodiment of the present invention.

Throughout the drawings, like reference numerals will be understood to refer to like parts, components and structures.

### DETAILED DESCRIPTION OF EMBODIMENTS OF THE PRESENT INVENTION

Hereinafter, embodiments of the present invention will be described with reference to the accompanying drawings.

Embodiments of the present invention provide a technology for generating summary information considering a user of an E-book service system.

An embodiment of the present invention generates a plurality of summary information considering a user characteristic, and provides corresponding summary information depending on a user's age group. For example, the user characteristic may be at least one of an age group and gender.

In the case in which the user characteristic is an age group, a type of summary information corresponding to each age group may be defined in different ways depending on a specific embodiment of the present invention and an operator's intention. For example, the type of summary information corresponding to the age group may be defined as in Table 1.

**Table 1**

| Age group | Description method | Run-time |
|---|---|---|
| 2 - 5 | Moving image and images without text | abort 3 mins. |
| 6 - 7 | Images and text | abort 1 mins. |
| 8 - 10 | Only text | abort 30 secs. |

For the above-described service, an embodiment of the present invention provides a method and an apparatus for generating summary information, and a method and an apparatus for displaying the generated summary information.

Hereinafter, a procedure for generating and displaying summary information according to an embodiment of the present invention are described below in more detail with reference to the accompanying drawings. In the following description, although an embodiment of the present invention refers to an age group as a user characteristic, the present invention is applicable to other characteristics such as gender and occupation.

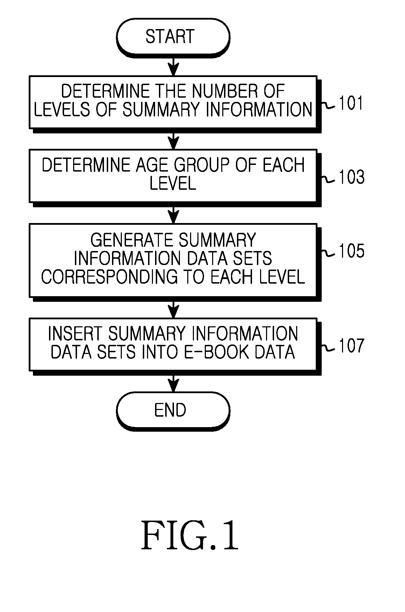

FIG. 1 is a flowchart illustrating a procedure for generating summary information for an E-book according to an embodiment of the present invention. For convenience in description, an embodiment of the present invention denotes a subject generating summary information according to the procedure illustrated in FIG. 1 by a "generating apparatus."

Referring to FIG. 1, the generating apparatus determines the number of levels of summary information in step 101. In other words, the generating apparatus determines the number of different summary information to be generated. According to an embodiment of the present invention, the generating apparatus may request a user to input the number of levels, and determine the number of levels depending on the input result. According to an embodiment of the present invention, the generating apparatus may determine the number of levels using information regarding an E-book. For example, the information regarding the E-book may be input in advance from the user or may be directly obtained from metadata of the E-book.

After determining the number of levels of the summary information, the generating apparatus proceeds to step 103 to determine an age group of each level. In other words, the generating apparatus determines an age group corresponding to each of the number of levels determined in step 101. According to an embodiment of the present invention, the generating apparatus may request that a user determine and input an age group for each level depending on the input result. According to an embodiment of the present invention, the generating apparatus may determine the age group using information regarding an E-book. For example, the information regarding the E-book may be input from the user or may be directly obtained from metadata of the E-book.

The generating apparatus proceeds to step 105 to generate summary information datasets corresponding to each level. The generating apparatus generates summary information including contents input or generated by the user. For example, one of the summary information datasets includes only a moving image, and another includes a combination of text and at least one image, and still another includes only text. Additionally, in each case, a sound may also be used. That is, the generating apparatus encodes input contents as summary information for an E-book. Additionally, to reduce an amount of data storage, compression may be used.

After generating the summary information datasets, the generating apparatus proceeds to step 107 to insert the summary information datasets generated in step 105 into E-book data. That is, the summary information is included in the E-book data. According to an embodiment of the present invention, the summary information may be stored as separate data different from the E-book data. In this case, the generating apparatus stores the fact that the summary information is related to the E-book data in the inside of the E-book data or on separate mapping data.

The above-generated summary information may be provided to a consumer of the E-book together with corresponding E-book data or independently. For example, the summary information may be provided online, or provided via a communication network, or provided offline via other storage media.

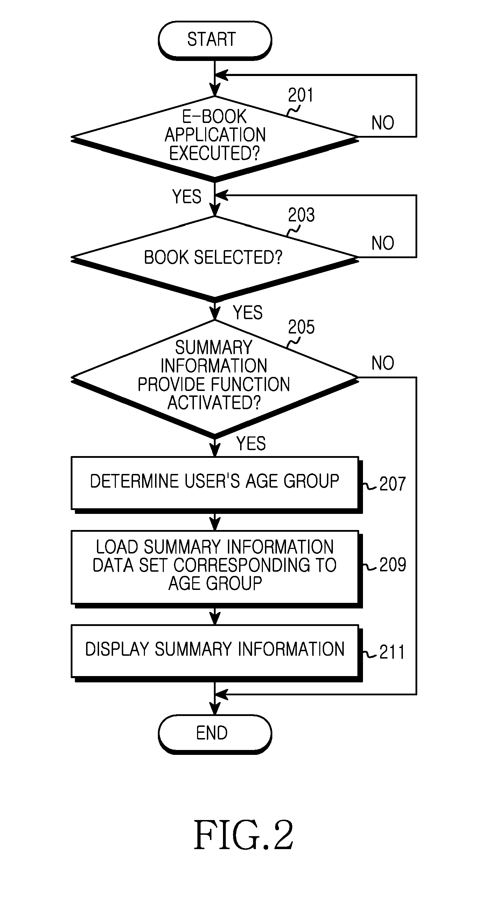

FIG. 2 is a flowchart illustrating a procedure for displaying summary information for an E-book according to an embodiment of the present invention. For convenience in description, an embodiment of the present invention denotes a subject displaying summary information according to the procedure illustrated in FIG. 2 on a "display apparatus."

Referring to FIG. 2, the display apparatus determines whether an E-book application is executed in step 201. That is, the display apparatus provides an E-book service via one application. Where the display apparatus is a device only used for an E-book service, the step of determining whether to execute the E-book application may be omitted.

When the E-book application is executed, the display apparatus proceeds to step 203 to determine whether one of the stored E-books is selected. For example, the display apparatus displays a list of the stored E-books when the E-book application is executed, and selects an E-book based on a user's input.

When one of the E-books is selected, the display apparatus proceeds to step 205 to determine whether a function providing summary information is activated. That is, according to an embodiment of the present invention, the summary information is not always provided but turned on or off depending on the user's selection. However, in the case in which the summary information is always provided according to an embodiment of the present invention, the level for determining whether the function providing summary information is activated may be omitted. When the function providing summary information is not activated, the display apparatus ends the present procedure.

When the function providing summary information is activated, the display apparatus proceeds to step 207 to determine the user's age group. According to an embodiment of the present invention, the display apparatus displays a screen asking a user's age group and determines the age group according to the user's input. According to an embodiment of the present invention, the display apparatus may determine the user's age group by reading information regarding the user stored in the display apparatus in advance. That is, the display apparatus may provide a function that allows the user to input age information at a different point in time from the present procedure.

After determining the user's age group, the display apparatus proceeds to step 209 to load summary information dataset corresponding to the determined age group. That is, the display apparatus stores summary information for the E-book written in a plurality of different types as well as the E-book data. The summary information may be a portion of the E-book data or may exist as separate data. In the case in which the summary information is a portion of the E-book data, the display apparatus extracts the summary information from the E-book data. In the case in which the summary information exists as separate data, the display apparatus determines information indicating the corresponding summary information from the E-book data or separate mapping data, and then loads the indicated summary information.

After loading the summary information, the display apparatus proceeds to step 211 to display the summary information. For example, the summary information may include only a moving image, a combination of text and a picture, or only text. Furthermore, in each case, a sound may be also be included. That is, the display apparatus decodes the loaded summary information data to recover image data, sound data, text data, and the like, and then output the same using an output unit such as a screen, a speaker, and the like. At this point, in the case in which the summary information data is stored in a compressed state, the display apparatus performs decompression.

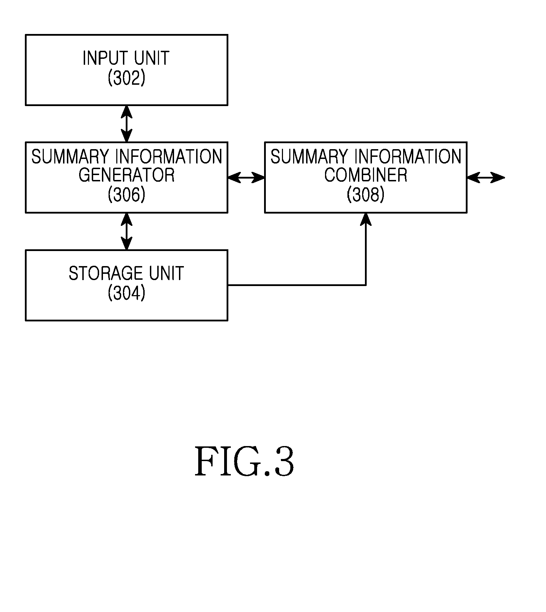

FIG. 3 is a block diagram illustrating an apparatus for generating summary information for an E-book according to an embodiment of the present invention.

The generating apparatus includes an input unit 302, a storage unit 304, a summary information generator 306, and a summary information combiner 308.

The input unit 302 serves as a unit for detecting an input of a user writing summary information. That is, the input unit 302 detects an input generated by the user and provides information corresponding to the input to the summary information generator 306. For example, the input unit 302 processes the user's input via a keyboard, a keypad, a touchscreen, a touch pad, a mouse, a special function button, and the like.

The storage unit 304 stores a program required for an operation of the generating apparatus, setting information, contents, etc. For example, the storage unit 304 may store an E-book and metadata of the E-book. Additionally, the storage unit 304 may store an interface requesting a user to input required information.

The summary information generator 306 generates summary information for an E-book in response to a user's command provided by the input unit 302 and data stored in the storage unit 304. Specifically, the summary information generator 306 determines the number of levels of the summary information. According to an embodiment of the present invention, the summary information generator 306 may request the user to input the number of levels and determine the number of levels according to the input result.

According to an embodiment of the present invention, the summary information generator 306 may determine the number of levels using information regarding the E-book. The summary information generator 306 then determines an age group of each level. According to an embodiment of the present invention, the summary information generator 306 may request the user to input an age group and determine the age group using information regarding the E-book. The summary information generator 306 then generates summary information corresponding to each level. The generating apparatus generates summary information including contents input or generated by the user's manipulation. That is, the summary information generator 306 encodes input contents as summary information for the E-book. Additionally, in order to reduce an amount of data storage, compression may be used.

The summary information combiner 308 combines summary information generated by the summary information generator 306 with E-book data. That is, the summary information combiner 308 inserts the summary information into the E-book data. That is, the summary information is included as a portion of the E-book data. According to an embodiment of the present invention, the summary information may exist as separate data different from the E-book data. The summary information combiner 308 records a connection relation between the summary information and the E-book data in the inside of the E-book data or on separate mapping data.

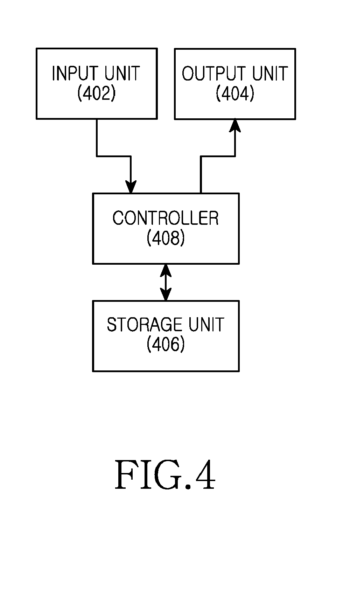

FIG. 4 is a block diagram illustrating an apparatus for displaying summary information for an E-book according to an embodiment of the present invention.

Referring to FIG. 4, the display apparatus includes an input unit 402, an output unit 404, a storage unit 406, and a controller 408.

The input unit 402 detects an input generated by a user and provides information corresponding to the input to the controller 408. That is, the input unit 402 processes the user's input via a keyboard, a keypad, a touchscreen, a touch pad, a mouse, a special function key, etc.

The output unit 404 is designed for expressing information to the user and includes a display unit that is a visual output unit, and a speaker which is an auditory output unit. The display unit displays state information occurring during the operation of the terminal, including numbers, characters, and images. For example, the display unit may be a Liquid Crystal Display (LCD), an Organic Light-Emitting Diode (OLED), etc.

The storage unit 406 stores a basic program for an operation of the display unit, application programs, and the like. More particularly, the storage unit 406 stores E-book data, summary information data, etc. Here, the summary information may be a portion of the E-book data, or may exist as separate data. In the case in which the summary information exists as the separate data, information representing a connection relation between the E-book and the summary information is included in the E-book data or separate mapping data. Additionally, the storage unit 406 provides stored data according to a request of the controller 408.

The controller 408 controls a function for outputting an E-book and summary information stored in the storage unit 406 via the output unit 404. Specifically, when an E-book application is executed, the controller 408 determines whether one of stored E-books is selected. For example, the controller 408 displays a list of the stored E-books when the E-book application is executed, and determines the selection corresponding to the user's manipulation. When one of the E-books is selected, the controller 408 determines whether a function providing summary information is activated. That is, according to an embodiment of the present invention, the summary information is not always provided, but is turned on or off depending on the user's selection. However, in the case in which the summary information is always provided according to an embodiment of the present invention, the level for determining whether the function providing summary information is activated may be omitted. When the function providing summary information is activated, the controller 408 determines the user's age group. According to an embodiment of the present invention, the controller 408 may display a screen asking the user's age group, and determine the age group depending on the user's input. According to an embodiment of the present invention, the controller 408 may determine the user's age group by reading information regarding the user stored in the storage unit 406 in advance. That is, the controller 408 may provide a function that allows the user to input age information separately from the present procedure. After determining the user's age group, the controller 408 loads summary information corresponding to the determined age group, and outputs the summary information via the output unit 404.

Embodiments of the present invention may provide an E-book service more useful to the user by selectively providing summary information with consideration of a user's characteristic in an E-book service system.

While the present invention has been shown and described with reference to certain embodiments and drawings of the portable terminal, it will be understood by those skilled in the art that various changes in form and details may be made therein without departing from the spirit and scope of the invention as defined by the appended claims and their equivalents.

## Claims

1. A method for generating summary information for an Electronic (E)-book, the method comprising:
determining the number of levels of the summary information and a user characteristic for each level of the summary information;
generating at least one summary information dataset corresponding to each level of the summary information; and
combining the at least one summary information dataset with corresponding E-book data.

2. The method of claim 1, wherein the number of levels of the summary information and the user characteristic for each level of the summary information are determined by a user's input.

3. The method of claim 1, wherein the number of levels of the summary information and the user characteristic for each level of the summary information are determined by metadata of the E-book.

4. The method of claim 1, wherein the at least one summary information dataset comprises at least one of summary information comprising a moving image, summary information comprising texts and at least one image, and summary information comprising texts.

5. The method of claim 1, wherein combining the at least one summary information dataset with the corresponding E-book data comprises inserting the summary information dataset into the E-book data.

6. The method of claim 1, wherein combining the at least one summary information dataset with the corresponding E-book data comprises recording information representing a connection relation between the at least one summary information set and the E-book on one of the E-book data and separate mapping data.

7. An apparatus arranged to implement a method of one of claims 1 to 6.

8. A method for displaying summary information for an Electronic (E)-book, the method comprising:
determining a user characteristic when the E-book is selected from a list;
loading summary information dataset corresponding to the user characteristic among a plurality of summary information datasets for the E-book;
decoding the summary information dataset; and
displaying the summary information.

9. The method of claim 8, further comprising:
before determining the user characteristic, determining whether a summary information display function is activated.

10. The method of claim 8, wherein determining the user characteristic comprises:
displaying a screen requesting the user characteristic; and
determining the user characteristic depending on a user's input.

11. The method of claim 8, wherein determining the user characteristic comprises reading information regarding a user stored in advance.

12. The method of claim 8, wherein the plurality of summary information dataset comprise at least one of summary information comprising a moving image, summary information comprising texts and at least one image, and summary information comprising texts.

13. The method of claim 8, wherein the summary information datasets are a portion of E-book data.

14. The method of claim 8, wherein the summary information datasets are stored separately from E-book data, and
wherein information representing a connection relation between the plurality of summary information datasets and the E-book is included in one of the E-book data and separate mapping data.

15. An apparatus arranged to implement a method of one of claims 8 to 14.
